# EUROPÄISCHE PATENTANMELDUNG

(11) **EP 2 072 770 A2**
(43) Veröffentlichungstag der Anmeldung: **24.06.2009**
(21) Anmeldenummer: 08105658.2
(22) Anmeldetag: 24.10.2008
(51) Int. Cl.: F01N 3/01, F01N 3/08, F01N 3/20

(54) **Katalysator zur Behandlung von Verbrennungsabgasen**

(30) Priorität: 21.12.2007 DE 102007062249
(71) Anmelder: Robert Bosch GmbH, 70442 Stuttgart (DE)
(72) Erfinder: Gernsbeck, Matthias, 71254, Ditzingen-Hirschlanden (DE); Mattern, Andreas, 76137, Karlsruhe (DE); Satet, Raphaelle, 70193, Stuttgart (DE); Eisele, Ulrich, 70199, Stuttgart (DE); Kureti, Sven, 76149, Karlsruhe (DE); Bockhorn, Henning, 76327, Pfinztal (DE)

(57) **Zusammenfassung**

Es wird ein Katalysator zur Behandlung von Verbrennungsabgasen beschrieben mit einer ersten dem zu reinigenden Abgas ausgesetzten Großfläche, die eine Schicht (12) aus einem zur Umsetzung von Gaskomponenten geeigneten katalytisch aktiven Material aufweist, wobei eine flächige erste Elektrode (16) in physischem Kontakt mit der Schicht (12) aus einem zur Umsetzung von Gaskomponenten geeigneten katalytisch aktiven Material positioniert ist, und wobei an die flächige erste Elektrode (16) eine elektrische Pumpspannung anlegbar ist.

## Beschreibung

Die vorliegende Erfindung bezieht sich auf einen Katalysator zur Behandlung von Verbrennungsabgasen, auf ein Verfahren zur Herstellung desselben sowie auf dessen Verwendung nach dem Oberbegriff der unabhängigen Ansprüche.

### Stand der Technik

Zur Nachbehandlung von Verbrennungsabgasen, welche beispielsweise bei industriellen Prozessen bzw. bei der motorischen Verbrennung von z. B. fossilen Brennstoffen entstehen, werden Katalysatoren eingesetzt. Diese dienen der Eliminierung gasförmiger Bestandteile der Verbrennungsabgase.

Dabei gewinnt zunehmend die Eliminierung von Stickoxiden aus Abgasen von Verbrennungsmotoren an Bedeutung. Zu diesem Zweck werden unter anderem Stickoxidspeicherkatalysatoren eingesetzt, die zumindest temporär in einem Verbrennungsabgas enthaltene Stickoxide einspeichern und während eines nachfolgenden periodischen Regenerierungsvorgangs wieder freisetzen. Eine weitere Möglichkeit besteht in der Verwendung von Abgasnachbehandlungsvorrichtungen auf Basis der sogenannten SCR-Technologie (Selective Catalytic Reduction), bei der chemische Reduktionsmittel wie beispielsweise Ammoniak mit dem zu reinigenden Abgas vermischt und Stickoxide eliminiert werden können.

Um die Eliminierungsrate eines derartigen Entstickungskatalysators zu optimieren, ist beispielsweise aus der JP 07-275714 bekannt, katalytisch Stickoxide in Stickstoff und Sauerstoff umzuwandeln, wobei der entstehende Sauerstoff an der Kathode einer elektrochemischen Zelle in Sauerstoffionen überführt und aus dem Reaktionsbereich entfernt wird. Auf diese Weise kann eine Rückreaktion von Stickstoff mit Sauerstoff zu Stickoxiden verhindert werden. Dieser Katalysator umfasst eine katalytisch aktive Schicht auf Basis eines Mischoxids sowie eine elektrochemische Zelle, die auf Basis von Zirkoniumdioxid als Festelektrolyt ausgeführt ist.

### Offenbarung der Erfindung

Aufgabe der vorliegenden Erfindung ist es, einen Katalysator zur Behandlung von Verbrennungsabgasen zur Verfügung zu stellen, der effizient Stickoxide aus Verbrennungsabgasen zu entfernen vermag.

Diese Aufgabe wird durch einen Katalysator bzw. durch ein Verfahren zu dessen Herstellung mit den kennzeichnenden Merkmalen der unabhängigen Ansprüche in vorteilhafter Weise gelöst. Dies beruht insbesondere darauf, dass der Katalysator eine flächige erste Elektrode aufweist, die in physischem Kontakt zu einer Schicht positioniert ist, die aus einem zur Umsetzung von Gaskomponenten des Verbrennungsabgases geeigneten katalytisch aktiven Material besteht. An diese flächige erste Elektrode kann eine elektrische Pumpspannung angelegt werden.

Dies ermöglicht, dass der bei der Zersetzung - beispielsweise von Stickoxid - entstehende Sauerstoff in Form von O²⁻ - Ionen elektrochemisch aus dem Bereich der Schicht, die aus einem zur Umsetzung von Gaskomponenten des Verbrennungsabgases geeigneten katalytisch aktiven Material besteht, entfernt wird. Auf diese Weise wird eine niedrige Sauerstoffkonzentration im Bereich dieser Schicht realisiert und das katalytisch aktive Material wird vor einer sauerstoffbedingten Deaktivierung wirksam geschützt.

Weitere vorteilhafte Ausführungsformen des vorliegenden Katalysators ergeben sich aus den Unteransprüchen.

So ist von Vorteil, wenn eine weitere Elektrode, die als Gegenelektrode zu der ersten Elektrode fungiert, mit dieser eine elektrochemische Zelle bildet und offen porös ausgeführt ist. Auf diese Weise kann der bei der Zersetzung von Stickoxiden freigesetzte Sauerstoff anodenseitig auf einfache Weise durch die offenporige Struktur der Elektrode abgeführt werden.

Weiterhin ist von Vorteil, wenn die das katalytisch aktive Material enthaltende Katalysatorschicht eine gewellte Struktur aufweist. Dies kann beispielsweise durch eine laterale kurzzeitige Streckung eines als keramischer Grünkörper vorliegenden Verbundes aus Katalysatorschicht, der ersten und zweiten Elektrode sowie eines Festelektrolyten erzeugt werden. Die gewellte Struktur hat den Vorteil einer Stabilitätszunahme bei gleichzeitiger Vergrößerung der reaktiven und zur Umsetzung von Abgasbestandteilen zur Verfügung stehenden Oberfläche des erfindungsgemäßen Katalysators.

Gemäß einer besonders vorteilhaften Ausführungsform der vorliegenden Erfindung wird ein Verbund aus einem Festelektrolyten, der ersten und zweiten Elektrode sowie einer Katalysatorschicht nach einer kurzzeitigen lateralen Dehnung parallel zu einer Längsachse des Grünkörpers unter Ausbildung eines rotationssymmetrischen Körpers aufgerollt. Auf diese Weise kann in einfacher Weise die endgültige dreidimensionale Form des Katalysators erzeugt werden.

Gemäß einer weiteren vorteilhaften Ausführungsform der vorliegenden Erfindung sind im Bereich der Katalysatorschicht mehrere erste Elektroden und mehrere zweite Elektroden vorgesehen, die zusammen eine Interdigitalstruktur bilden. Diese Interdigitalstruktur ermöglicht eine einfache gemeinsame Kontaktierung, jeweils für alle ersten Elektroden bzw. für alle zweiten Elektroden mittels einer gemeinsamen elektrischen Zuleitung, beispielsweise stirnseitig an dem erzeugten rotationssymmetrischen Katalysatorkörper. Weitere vorteilhafte Ausführungsformen des vorliegenden Katalysators ergeben sich aus den Unteransprüchen.

### Kurze Beschreibung der Zeichnungen

Eine Ausführungsform der vorliegenden Erfindung ist in der Zeichnung dargestellt und in der sich anschließenden Beschreibung näher erläutert. Es zeigt
- Figur 1: eine schematische Schnittdarstellung eines Katalysators zur Behandlung von Verbrennungsabgasen gemäß einer ersten Ausführungsform der vorliegenden Erfindung,
- Figur 2: eine schematische Schnittdarstellung eines Katalysators zur Behandlung von Verbrennungsabgasen gemäß einer zweiten Ausführungsform der vorliegenden Erfindung
- Figur 3: eine schematische Schnittdarstellung des in Figur 2 dargestellten Katalysators, wobei dieser mit einer gewellten Struktur versehen ist und
- Figur 4: eine schematische Schnittdarstellung eines Katalysators gemäß einem der vorgenannten Ausführungsbeispiele als rotationssymmetrischer Katalysatorkörper.

### Ausführungsformen der Erfindung

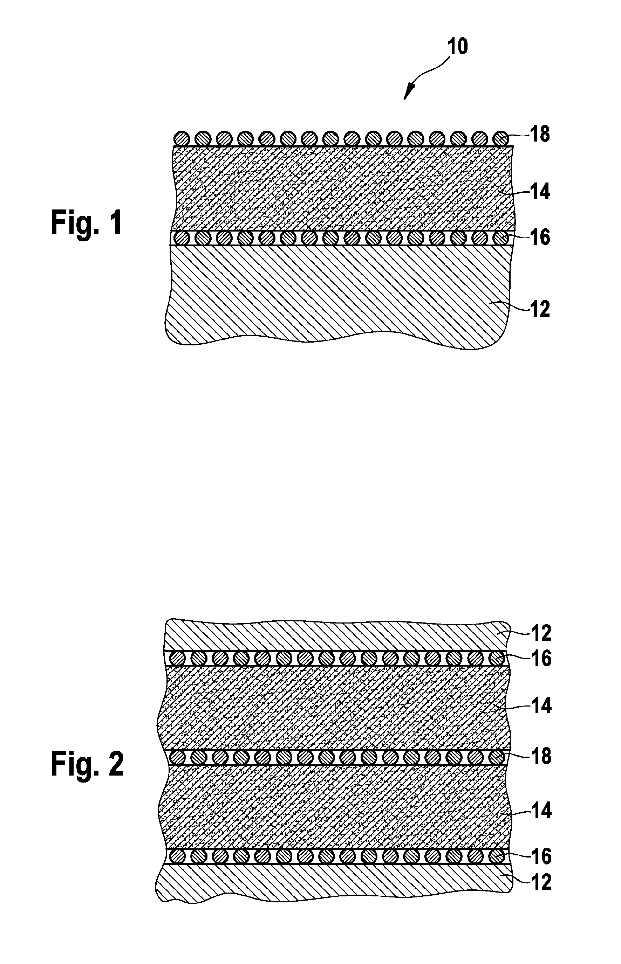

In Figur 1 ist schematisch ein der Erfindung zugrundeliegender Katalysator zur Behandlung von Verbrennungsabgasen dargestellt. Dieser dient vorzugsweise der Umsetzung von gasförmigen bzw. festen Schadstoffbestandteilen der Verbrennungsabgase, insbesondere der Umsetzung von sauerstoffhaltigen gasförmigen Komponenten. Dabei umfasst der Katalysator 10 eine Katalysatorschicht 12 eines katalytisch aktiven Materials und ist vorzugsweise von einer Festelektrolytschicht 14 bedeckt. Als Festelektrolyt eignet sich beispielsweise mit Yttriumoxid teil- bzw. vollstabilisiertes Zirkoniumdioxid, Bi₂O₃ oder Gd-dotiertes CeO₂. Darüber hinaus sind beispielsweise auf einer weiteren Großfläche der Katalysatorschicht 12 eine oder mehrere erste Elektroden 16 positioniert. Die mindestens eine erste Elektrode 16 bildet zusammen mit mindestens einer zweiten Elektrode 18, die vorzugsweise auf der der Schicht 12 abgewandten Seite der Festelektrolytschicht 14 positioniert ist, eine elektrochemische Zelle. Dabei sind beispielsweise die Elektroden 16, 18 aus Nickel, Silber, Platin oder Palladium bzw. aus Legierungen dieser Elemente gefertigt.

Als katalytisch aktive Komponenten der Katalysatorschicht 12 eignen sich beispielsweise metallische Komponenten wie Rhodium, Palladium, Platin, Iridium oder Nickel bzw. Legierungen derselben. Diese metallischen Komponenten können beispielsweise als nanoskalige Dispersion auf der Oberfläche von Zirkoniumdioxidpartikeln vorliegen. Des weiteren eignen sich als katalytisch aktive Komponenten der Katalysatorschicht 12 Mischoxide wie insbesondere Spinelle der allgemeinen Formel A₂BO₄ sowie Perowskite der allgemeinen Formel ABO₃, wobei A beispielsweise für Elemente der Lanthaniden, Actiniden, der Alkalimetalle, der Erdalkalimetalle oder für Yttrium steht und B für Kupfer, Eisen, Nickel oder Kobalt. Dabei können die A- bzw. B-Positionen der genannten Verbindungen gegebenenfalls auch unstöchiometrisch jeweils durch mehrere der vorgenannten Elemente belegt sein. Besonders bevorzugt sind Perowskite, bei denen die A-Position mit den Elementen Lanthan oder Strontium belegt sind und die B-Positionen mit mindestens einem der Elemente Eisen, Kobalt oder Nickel. Beispielhafte Vertreter dieser geeigneten Perowskite sind (La_{0,9}Sr_{0,1})(Fe_{0,9}Ni_{0,1})O₃, (La_{0,9}Sr_{0,1})FeO₃ oder La_{0,5}Sr_{0,5}CoO₃; die Verbindung LaNiO₃ ist aus technischen Gründen eher ungeeignet.

Zur Herstellung eines Katalysators gemäß dem in Figur 1 dargestellten ersten Ausführungsbeispiel wird vorzugsweise zunächst eine Folie eines keramischen Festelektrolytmaterials als Grünkörper vorgelegt und diese auf einer ersten Großfläche mit mindestens einer ersten Elektrode 16 und auf einer gegenüberliegenden weiteren Großfläche mit mindestens einer weiteren Elektrode 18 bedruckt wird. Daran anschließend wird die mit der mindestens einen ersten Elektrode 16 versehene Großfläche der Festelektrolytschicht 14 mit der Katalysatorschicht 12 versehen.

Die Elektroden 16, 18 werden vorzugsweise in Form einer Interdigitalstruktur aufgebracht. Dazu werden die Elektroden 16, 18 beispielsweise in Form mehrerer, insbesondere paralleler, metallischer Streifen ausgeführt, wobei beispielsweise die ersten Elektroden 16 bis in unmittelbare Nähe einer ersten Stirnseite des entstehenden Schichtverbunds geführt werden; dabei weisen die ersten Elektroden 16 zur gegenüberliegenden Stirnseite des Schichtverbundes einen Mindestabstand von 1 bis 4 mm auf. Die weiteren Elektroden 18 sind gegenläufig orientiert; sie halten zur ersten Stirnfläche des Schichtverbundes einen Mindestabstand von 1 bis 4 mm ein und grenzen im Wesentlichen unmittelbar an die gegenüberliegende Stirnfläche des Schichtverbundes. Diese Maßnahme erlaubt eine besonders einfache Kontaktierung der ersten bzw. weiteren Elektroden 16, 18, indem an der ersten Stirnfläche des Schichtverbundes eine ausschließliche Kontaktierung der ersten Elektroden 16 erfolgt und an der gegenüberliegenden Stirnseite eine ausschließliche Kontaktierung der weiteren Elektroden 18. Der auf diese Weise erzeugte Schichtverbund wird einer Wärmebehandlung, insbesondere Sinterbehandlung, unterzogen unter Ausbildung der in Figur 1 dargestellten Katalysatorstruktur.

Vor der Wärmebehandlung kann jedoch optional ein sogenannter Reckprozess durchgeführt werden, bei dem der aus Katalysatorschicht 12, Festelektrolytschicht 14 sowie Elektroden 16, 18 bestehende Verbundkörper einer beispielsweise kurzzeitigen lateralen Dehnung unterworfen wird, sodass eine gewellte Struktur des Verbundkörpers resultiert. Diese bleibt bei einem nachfolgenden Wärmebehandlungs- bzw. Sinterprozess erhalten, wobei eine vergrößerte katalytisch wirksame Oberfläche des resultierenden Katalysators folgt.

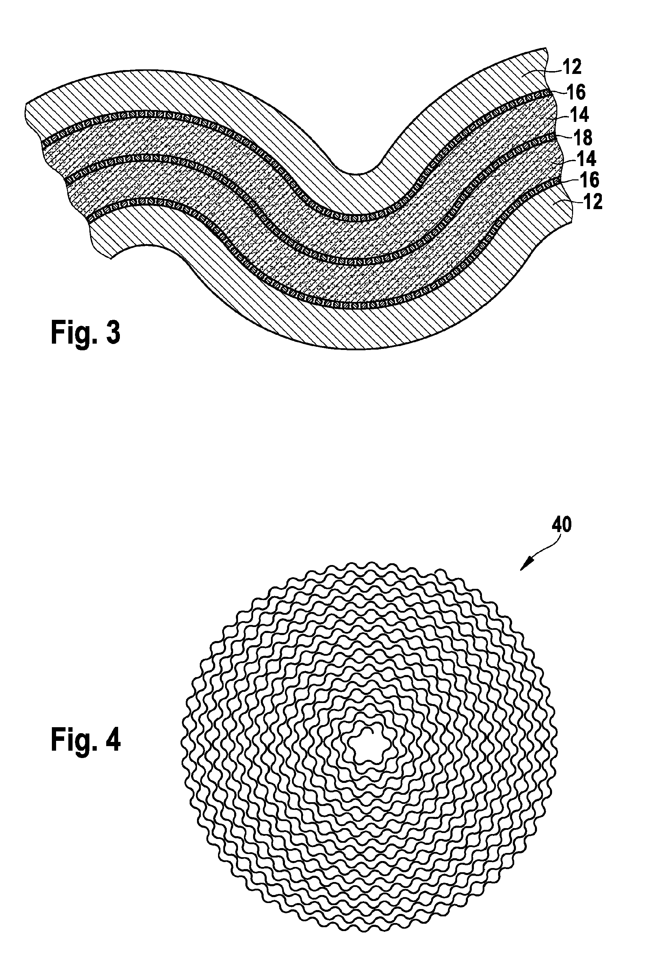

Eine weitere Ausführungsform eines Katalysators gemäß vorliegender Erfindung ist in Figur 2 dargestellt. Dabei bezeichnen gleiche Bezugszeichen gleiche Bauteilkomponenten wie in den vorhergehenden Abbildungen. Der aus Katalysatorschicht 12, Festelektrolytschicht 14 und den Elektroden 16, 18 bestehende Verbundkörper wird vor der Wärme- bzw. Sinterbehandlung mit einem weiteren, gleichartigen Verbundkörper zusammenlaminiert, wobei beide Verbundkörper gemeinsame weitere Elektroden 18 aufweisen. Diese aus zwei Verbundanordnungen bestehende Gesamtstruktur wird dann der Wärme- bzw. Sinterbehandlung unterworfen. Es resultiert der in Figur 2 dargestellte Katalysator gemäß einer zweiten Ausführungsform. Wird die aus zwei Verbundanordnungen bestehende Gesamtstruktur vor der Wärme- bzw. Sinterbehandlung einem Reckprozess unterworfen, so resultiert nach dem Sintern ein Katalysator gemäß einer dritten Ausführungsform, wie er in Figur 3 dargestellt ist.

Die Katalysatoren gemäß erstem bis drittem Ausführungsbeispiel können darüber hinaus vor der abschließenden Wärme- bzw. Sinterbehandlung um eine zu einer Längsachse der Verbundanordnung parallele Drehachse aufgerollt werden, sodass ein insbesondere zylindrischer, dreidimensionaler Katalysatorkörper 40 entsteht. Dieser wird beispielsweise nach der abschließenden Wärme- bzw. Sinterbehandlung mit Elektrodenkontaktierungen versehen, indem der resultierende, insbesondere zylindrische Katalysatorkörper 40 beispielsweise stirnseitig jeweils angeschliffen wird und jeweils stirnseitig mit einem Netz eines Nickel- bzw. Silberdrahtes versehen wird zur Kontaktierung der ersten bzw. zweiten Elektroden 16, 18.

Die Funktionsweise des Katalysators 10, 40 beruht darauf, dass bei üblichen Katalysatoren gemäß Stand der Technik, der beispielsweise bei der thermischen Spaltung von Stickoxiden frei werdende Sauerstoff sich an der Oberfläche des Katalysatormaterials anlagert und so die katalytische Aktivität herabsetzt. Um dies zu verhindern, wird im Betrieb an die Elektroden 16, 18 des Katalysators 10, 40 eine Spannung angelegt, die als Pumpspannung in ausreichender Höhe dazu führt, dass Sauerstoff von der mindestens einen ersten Elektrode 16 zu der mindestens einen weiteren Elektrode 18 in Form von Sauerstoffionen transportiert wird. Liegt an der durch die Katalysatorschicht 12 gebildeten Großfläche eine Abgasatmosphäre an, so verarmt die Oberfläche der Katalysatorschicht 12 an gasförmigem Sauerstoff, wodurch die Zersetzung von sauerstoffhaltigen Komponenten eines Verbrennungsabgases begünstigt wird.

Weiterhin wird einer Deaktivierung der in der Katalysatorschicht 12 vorgesehenen katalytisch aktiven Komponenten vorgebeugt. Dabei ist von Vorteil, wenn die als Anode fungierende mindestens eine weitere Elektrode 18 offenporig ausgeführt ist, sodass der zu dieser gepumpte Sauerstoff auf einfache Weise entweichen kann.

Der vorbeschriebene Katalysator gemäß der beschriebenen Ausführungsformen eignet sich insbesondere zur Umsetzung von sauerstoffhaltigen Gaskomponenten eines Verbrennungsgases wie Stickoxiden oder Schwefeloxiden. Er kann sowohl zur Abgasnachbehandlung von Verbrennungsabgasen von Verbrennungsmotoren herangezogen werden als auch zur Abgasbehandlung von Heizanlagen oder Kraftwerksanwendungen.

## Patentansprüche

1. Katalysator zur Behandlung von Verbrennungsabgasen mit einer ersten dem zu reinigenden Abgas ausgesetzten Großfläche, die eine Schicht aus einem zur Umsetzung von Gaskomponenten geeigneten katalytisch aktiven Material aufweist, **dadurch gekennzeichnet, dass** eine flächige erste Elektrode (16) in physischem Kontakt mit der Schicht (12) aus einem zur Umsetzung von Gaskomponenten geeigneten katalytisch aktiven Material positioniert ist, wobei an die flächige erste Elektrode (16) eine elektrische Pumpspannung anlegbar ist.

2. Katalysator nach Anspruch 1, **dadurch gekennzeichnet, dass** eine Festelektrolytschicht (14) vorgesehen ist, die mit der ersten Elektrode (16) und/oder einer weiteren Elektrode (18) in physischem Kontakt steht, wobei die erste und die weitere Elektrode (16, 18) eine elektrochemische Zelle bildet.

3. Katalysator nach Anspruch 1 oder 2, **dadurch gekennzeichnet, dass** die weitere Elektrode (18) als Anode fungiert und offenporig ausgeführt ist.

4. Katalysator nach einem der Ansprüche 1 bis 3, **dadurch gekennzeichnet, dass** die Festelektrolytschicht Zirkoniumdioxid enthält.

5. Katalysator nach einem der vorhergehenden Ansprüche, **dadurch gekennzeichnet, dass** das Katalysatormaterial ein Spinell oder einen Perowskit umfasst.

6. Katalysator nach Anspruch 5, **dadurch gekennzeichnet, dass** der Perowskit eine Verbindung der allgemeinen Formel ABO₃ ist und der Spinell eine Verbindung der allgemeinen Formel A₂BO₄, wobei A für Yttrium oder mindestens ein Element der Lanthanide, Actinide, der Alkalimetalle oder der Erdalkalimetalle sowie für Mischungen der genannten Elemente steht, und B für mindestens eines der Elemente Kupfer, Eisen, Cobalt, Nickel oder Mischungen der genannten Elemente steht.

7. Katalysator nach einem der vorhergehenden Ansprüche, **dadurch gekennzeichnet, dass** die Schicht (12) aus einem zur Umsetzung von Gaskomponenten geeigneten katalytisch aktiven Material eine gewellte Struktur aufweist.

8. Katalysator nach einem der vorhergehenden Ansprüche, **dadurch gekennzeichnet, dass** mehrere erste und mehrere weitere Elektroden (16, 18) vorgesehen sind, die miteinander eine Interdigitalstruktur ausbilden.

9. Verfahren zur Herstellung eines Katalysators zur Behandlung von Verbrennungsabgasen, insbesondere eines Katalysators nach einem der Ansprüche 1 bis 8, wobei eine ein Festelektrolytmaterial umfassende keramische Grünkörperfolie auf einer ersten Großfläche mit einer ersten Elektrode und mit einer ein zur Umsetzung von Gaskomponenten geeignetes katalytisch aktives Material enthaltenden Schicht versehne wird und auf ihrer zweiten Großfläche mit einer zweiten Elektrode versehen wird, **dadurch gekennzeichnet, dass** der Verbund aus keramischer Grünkörperfolie, erster und zweiter Elektrode (16, 18) und der Schicht (12) aus einem zur Umsetzung von Gaskomponenten geeigneten katalytisch aktiven Material lateral gedehnt wird, sodass eine wellige Struktur resultiert.

10. Verfahren nach Anspruch 9, **dadurch gekennzeichnet, dass** der Verbund aus keramischer Grünkörperfolie, erster und zweiter Elektrode (16, 18) und der Schicht (12) aus einem zur Umsetzung von Gaskomponenten geeigneten katalytisch aktiven Material nach der lateralen Dehnung parallel zu einer Längsachse der Grünkörperfolie unter Ausbildung eines rotationssymmetrischen Körpers (40) aufgerollt wird.

11. Verfahren nach Anspruch 9 oder 10, **dadurch gekennzeichnet, dass** abschließend eine Sinterbehandlung des Verbundes aus keramischer Grünkörperfolie, erster und zweiter Elektrode (16, 18) und der Schicht (12) aus einem zur Umsetzung von Gaskomponenten geeigneten katalytisch aktiven Material erfolgt.

12. Verwendung eines Katalysators nach einem der Ansprüche 1 bis 8 zur Entfernung sauerstoffhaltiger Komponenten eines Gasgemischs.
